Europäisches Patentamt

**European Patent Office**

Office européen des brevets

(11) Veröffentlichungsnummer: **0 100 568 B1**

(12) **EUROPÄISCHE PATENTSCHRIFT**

(45) Veröffentlichungstag der Patentschrift:
**15.07.87**

(51) Int. Cl.⁴: **C 02 F 1/42, C 02 F 9/00**

(21) Anmeldenummer: **83200984.9**

(22) Anmeldetag: **01.07.83**

(54) **Verfahren zum Behandeln von Abwasser.**

(30) Priorität: **04.08.82 DE 3229019**

(43) Veröffentlichungstag der Anmeldung:
**15.02.84 Patentblatt 84/7**

(45) Bekanntmachung des Hinweises auf die Patenterteilung:
**15.07.87 Patentblatt 87/29**

(84) Benannte Vertragsstaaten:
**BE DE FR GB NL**

(56) Entgegenhaltungen:
**DE - A - 3 109 848**
**US - A - 3 939 071**
**US - A - 4 234 419**

**HELMER-SEKOULOV: "Weitergehende Abwasserreinigung", 1. Auflage, Deutscher Fachschriften-Verlag, Mainz, DE, Seiten 191-193: "VI Elimination gelöster anorganischer Substanzen"**

(73) Patentinhaber: **METALLGESELLSCHAFT AG,**
**Reuterweg 14 Postfach 3724, D-6000 Frankfurt/M.1 (DE)**

(72) Erfinder: **Hitzel, Hans, Am Steinberg 24,**
**D-6057 Dietzenbach (DE)**

(74) Vertreter: **Rieger, Harald, Dr., Reuterweg 14,**
**D-6000 Frankfurt am Main (DE)**

ACTORUM AG

## Beschreibung

Die Erfindung betrifft ein Verfahren zum Behandeln von Abwasser, insbesondere Gaskondensaten aus Anlagen der Kohlevergasung und/oder Kohlechemie, mit einem Gehalt an den Anionen $SO_4^-$, $SCN^-$, $NO_3^-$, $Cl^-$ und $F^-$ von insgesamt mindestens 2 mval und einer orgnischen Belastung pro Liter von mindestens 1000 mg chemischem Sauerstoffbedarf (CSB), wobei man das Abwasser durch eine biologische Reinigung leitet, eine Feinreinigung anschliesst, in einer Anionenaustauschstufe starke Anionen gegen Hydrogencarbonationen austauscht und mindestens einen Teil des behandelten Wassers dem Abwasser vor der biologischen Reinigungsstufe zugibt.

Ein solches Verfahren ist in der DE-AI 3 109 848 beschrieben; dieses Verfahren wird hier weiterentwickelt. Aus der US-A 4 234 419 ist ein Wasserentsalzungsverfahren bekannt, wobei das Wasser zunächst durch eine Anionenaustauschstufe und dann durch eine Kationenaustauchstufe geleitet wird. Ferner ist es bekannt, eine Anionenaustauschstufe vor einer Kationenaustauschstufe zur Weiterbehandlung eines biologisch geklärten Abwassers einzusetzen (Helmer-Sekoulov «Weitergehende Abwasserreinigung», S. 192, Absatz 2). In der US-A 3 939 071 ist beschrieben, schwach saure Kationenaustauscher mit organischen Säuren zu regenerieren.

Bei der Umwandlung von Kohle und ähnlichen Brennstoffen, z.B. durch Vergasung, entstehen erheblich verschmutzte Abwässer, die Bestandteile des Vergasungs-Produktgases enthalten. In mehreren Grobreinigungsstufen entfernt man aus dem Wasser, in welchem sich Kondensat des Produktgases befindet, Teere, Öle, Phenole, saure Gase und Ammoniak. Eine solche Behandlung ist in Chemical Engineering Progress, Band 71, No. 6 (1975), Seiten 99 bis 104, beschrieben. Dabei werden grosse Anteile der Phenole beispielsweise durch Flüssig-Flüssig-Extraktion entfernt; Ammoniak und Sulfide kann man durch Dampfstrippen zum Teil beseitigen. Das in dieser Weise grob gereinigte Abwasser enthält jedoch noch eine Reihe störender Bestandteile, wie z.B. Sulfat- und Thiocyanat-, Chlor-, Fluor- und Nitrationen sowie freien $NH_3$ und Ammoniumionen und organische Verunreinigungen, die eine direkte Ableitung in Vorfluter oder eine weitere Nutzung, z.B. als Kühlwasser, nicht gestatten. Deshalb wird das Abwasser zunächst biologisch gereinigt, eine Feinreinigung schliesst sich an und in einer Anionenaustauschstufe werden starke Anionen ($SO_4^-$, $NO_3^-$, $Cl^-$, $F^-$) gegen Hydrogencarbonationen ausgetauscht und mindestens ein Teil des behandelten Wassers wird vor die biologische Reinigung zurückgeführt. Das behandelte, $CO_3$-/$HCO_3$-Ionen enthaltende Wasser bewirkt hierbei einen Ausgleich des Kationendefizits und eine Stabilisierung des pH-Wertes in der biologischen Reinigung.

Alkaliionen werden dem System mit dem Abwasser zugeführt. Die Behandlung in der biologischen Reinigungszone, vorzugsweise mit Nitrifizierung und Denitrifizierung, führt ohne die erwähnte Rückführung von Alkaliionen zu einem Kationendefizit. Die Ursachen sind vor allem die Stickstoff-Aufnahme in das Zellmaterial der Mikroorganismen und die Umwandlung von Ammoniak durch biologische Oxidation zu Nitrit und Nitrat. Dadurch fällt der pH-Wert stark ab. Dem könnte man z.B. durch Zugabe von $Ca(OH)_2$ entgegenwirken, um eine Störung der biologischen Vorgänge zu vermeiden. Grössere Calciumkonzentrationen würden jedoch bei der weiteren Verwendung als Kühlwasser stören und müssten mit hohem Aufwand vermindert werden. Auch die Zugabe anderer Fremdstoffe, wie etwa Soda, ist einerseits teuer und sie bringen im Fall der Wiederverwendung des Wassers das Problem mit sich, diese Stoffe auch wieder entfernen zu müssen. Diese Nachteile werden durch den Anionenaustausch und die Rückführung des behandelten Wassers vermieden. Der pH-Wert in der biologischen Reinigung wird so im günstigen Bereich von etwa 6 bis 8 gehalten.

Das behandelte, zum Abwasser zurückgeleitete Wasser reichert sich durch die Kreislaufführung mit starken Kationen, nämlich Na-, Ca- und/oder Mg-Ionen an, während die starken Anionen im Anionenaustauscher mindestens teilweise entfernt werden. Dadurch kann sich im System ein störender Alkalitätsüberschuss einstellen. Dies hat nachteilige Auswirkungen auf den Austausch starker Anionen gegen Hydrogencarbonationen (d.h. Alkalität) mit Hilfe des Anionenaustauschers, bei dem vorzugsweise ein schwach basischer Anionenaustauscher verwendet wird. Bei diesem Anionenaustausch steht nun nämlich die zu bildende Alkalität in Konkurrenz zu bereits vorhandener Alkalität.

Der Erfindung liegt deshalb die Aufgabe zugrunde, beim eingangs genannten Verfahren einen störenden Alkalitätsüberschuss im Wasser zu vermeiden. Erfindungsgemäss wird dies durch die Merkmale des Kennzeichens des Patentanspruchs 1 erreicht.

Da die Alkalität nur bis auf einen Rest von etwa 2 mval/l entfernt zu werden braucht, genügt es zumeist, nur einen Teilstrom des Wassers durch die Kationenaustauschstufe zu leiten. Wenn man das behandelte Wasser als Kühlwasser in einem Kühlturm verwenden will, ist es vorteilhaft, die überschüssige Alkalität vorher zu entfernen. Es hat sich nämlich gezeigt, dass eine hohe Alkalität im Kühlwasser gewisse Schwierigkeiten bei der Kühlwasserkonditionierung mit sich bringt, z.B. bei der Anwendung von Chlor als Biocid. Ferner ist eine Begrenzung der Salzkonzentration im Kühlwasser erforderlich, unabhängig von der Art dieser Salze.

Die Überschussalkalität wird bevorzugt durch Anwendung eines schwach sauren Kationenaustauschers in der Wasserstofform entfernt. Zum Regenerieren des Kationenaustauschers verwendet man organische Säuren, wie sie z.B. im Reaktionswasser der Kohlenwasserstoffsynthese als Abwasser anfallen. Den Regenerierablauf führt man ebenfalls dem Abwasser vor der biologischen Reinigung zu und baut ihn biologisch ab. Wenn man demgegenüber Mineralsäuren als Regeneriermittel einsetzt, sind diese als die entsprechenden Salze im Regenerierablauf enthalten, der dann nicht mehr dem System zugeführt werden darf. Bei der Regeneration des Kationenaustauschers mittels organischer Säuren, vorzugsweise Fettsäuren mit einer Dissoziationskonstante grösser als $10^{-5}$, und Rückführung des Regenerierablaufs in die biologische Behandlungsstufe gehen die Alkaliionen nicht verloren und stehen in erwünschter Weise weiterhin zur Neutralisation in der biologischen Reinigung zur Verfügung. Andererseits enthält das durch Kationenaustausch behandelte Wasser einen entsprechend reduzierten Gehalt an Alkalität, wie dies im Kühlwasser für den Kühlturm erwünscht ist. Ist eine Entfernung von Alkaliionen aus dem System erforderlich, so ist die Verwendung von Mineralsäure zum Regenerieren des Kationenaustauschers angebracht, wobei der Regenerierablauf abgestossen wird.

Die Entfernung von überschüssiger Alkalität durch Kationenaustausch hat den Vorteil, dass praktisch jede beliebige Alkalität im Ablauf der Anionenaustauschstufe eingestellt werden kann und eine dementsprechende Reduzierung des Salzgehalts stattfindet. Vorteilhaft ist ferner, dass auch Ammonium-Ionen auf diesem Weg zum Teil entfernt werden.

Ein Beispiel für die Verfahrensführung ist in der Zeichnung dargestellt.

Ein von Teer, Öl, Phenolen, sauren Gasen und Ammoniak bereits grob gereinigtes Abwasser wird in der Leitung 1 herangeführt und in einen Fällungsbehälter 2 geleitet, dem man durch die Leitung 3 Ca(OH)$_2$ zuführt. Hierdurch wird ein Teil des im Abwasser enthaltenen Fluorids als CaF$_2$ ausgefällt. Die Mischung wird dem Fällungsbehälter 4 aufgegeben, zusammen mit behandeltem Wasser aus der Leitung 5, das einen CO$_3$/HCO$_3$-Ionengehalt entsprechend einer Alkalität von mindestens 5 mval/l aufweist. Ausfallendes Calciumcarbonat und Calciumfluorid werden über Leitung 4a als Schlamm aus dem Behälter 4 abgezogen. Im Fällungsschlamm der Leitung 4a sind etwa 40% der im Abwasser der Leitung 1 vorhandenen Fluorionen enthalten. Es ist zweckmässig, einen Teil des Schlamms der Leitung 4a in den Behälter 4 zurückzuführen und als Kontaktschlamm zu benutzen, was die Zeichnung aber nicht berücksichtigt.

Dem in der Leitung 7 den Behälter 4 verlassenden Abwasser mischt man sauren Regenerierablauf aus der Leitung 29 zu, der bei der Regeneration des schwach sauren Kationenaustauschers der Kationenaustauschanlage 26 mit organischen Säuren anfällt. Anschliessend wird das Abwasser der biologischen Behandlungsstufe 8 aufgegeben. Rücklaufschlamm kommt aus der Leitung 9. Die für die Behandlungsstufe 8 nötige Zufuhr von Luft oder auch sauerstoffreicherem Gas ist an sich bekannt und wurde zur Vereinfachung in der Zeichnung weggelassen. Die Zulaufzone 8a der biologischen Behandlungsstufe 8 wird als Denitrifikationszone betrieben, im Ablaufbereich 8b findet der weitere biologische Abbau der organischen Substanzen und die Nitrifikation statt. Durch die interne Rückführung über die gestrichelt gezeichnete Leitung und Pumpe 8c wird nitrifiziertes Abwasser aus der Zone 8b zur Denitrifikationszone 8a zurückgeführt. Das biologisch aufbereitete Abwasser fliesst in der Leitung 10 in ein Nachklärbecken 11, aus welchem durch die Leitung 9 Schlamm abgezogen und zurückgeführt wird.

Das biologisch gereinigte Abwasser gelangt in der Leitung 12 zu einem Flockungsbehälter 13. In diesem Behälter wird durch die Leitung 14 Flockungsmittel, gegebenenfalls zusammen mit Flockungshilfsmittel, zugegeben. Der Flockungsschlamm wird zusammen mit dem Überschussschlamm des Beckens 11 aus Leitung 9 durch die Leitung 15 abgeführt. Auch für die Flockung ist es vorteilhaft, mit Schlammrückführung zu arbeiten, was in der Zeichnung aber nicht dargestellt ist.

Für das Abwasser in der Leitung 16 folgt eine Filtration in einem Zweistoff-Filter 17 und eine adsorptive Behandlung in einem Aktivkohlefilter 18. Die Spülwässer dieser beiden Filter 17 und 18 werden über die Leitungen 17a und 18a dem Flockungsbehälter 13 zugeführt.

Das Wasser aus dem Aktivkohlefilter 18 wird dann durch eine Anionenaustauschanlage 19 geleitet. Das in diese Anlage eintretende Wasser weist pro Liter einen Fluorionengehalt von höchstens 100 mg und einen chemischen Sauerstoffbedarf (CSB) von höchstens 200 mg auf. In der Austauschanlage 19 werden starke Anionen, nämlich Fluor-, Chlor-, Nitrat- und Sulfationen, gegen HCO$_3$-Ionen ausgetauscht.

Zweckmässigerweise verwendet man für den Austausch starker Anionen gegen Hydrogencarbonat schwach basische Anionenaustauscher mit guter Selektivität zumindest für Chlorionen. Vorzugsweise kann ein handelsüblicher Anionenaustauscher mit der Bezeichnung IRA-68 von Rohm und Haas verwendet werden. Geeignete Ionenaustauscher wurden im US-Patent 3 156 644 und in Ind. Eng. Chem., Process Res. & Dev. (1964), Bd. 3, Seite 404, beschrieben. Da die Selektivität der üblichen, schwach basischen Anionenaustauscher für den Austausch von Fluorionen gegen HCO$_3$-Ionen nicht besonders günstig ist, erfolgt bei einer erheblichen Konzentration an Fluorionen im Abwasser, z.B. grösser als 50 mg/l, zweckmässigerweise vor der biologischen Reinigung mit Ca(OH)$_2$-Überschuss die Fällung von CaF$_2$ im Behälter 2. Vorteilhafterweise gibt man das behandelte Wasser der Leitung 5 nach der CaF$_2$-Fällung zu, weil damit das für die CaF$_2$-Fällung überschüssig angewandte Kalkhydrat als CaCO$_3$ ausgefällt und abgetrennt werden kann. Die Konzentration an Ca-Ionen, die an anderer Stelle stören würde, kann dadurch niedrig gehalten werden.

Ist der Anionenaustauscher der Anlage 19 erschöpft, wird er mit Ammoniaklösung behandelt, die in der Leitung 19a herangeführt wird. Der dabei entstehende Regenerierablauf, der die ausgetauschten starken Anionen enthält, wird in der Leitung 19b abgeführt. Aus diesem Regenerierablauf wird Ammoniak in nicht dargestellter Weise zurückgewonnen. Vor der Wiederverwendung wird der Anionenaustauscher mit $CO_2$ aus der Leitung 19c konditioniert, d.h. in die $HCO_3$-Form übergeführt.

Es ist vorteilhaft, das von der Anionenaustauschanlage 19 kommende Wasser als Kühlwasser in einem Kühlturm 21 zu verwenden. Auf diese Weise ist es möglich, eine der Verdunstung entsprechende Beseitigung des Abwassers sowie eine entsprechende Einsparung an Frischwasser für Kühlzwecke zu erreichen. Durch die im Kühlturm erfolgende Verdunstung steigt die Konzentration an $CO_3/HCO_3$-Ionen im Wasser, welches man dem Abwasser vor der biologischen Reinigung zumischt, entsprechend an. Gleichzeitig wird durch den Gehalt an Alkali-Carbonat/-Hydrogencarbonat eine pH-Senkung beim Nitrifizieren von Ammoniak im Kühlsystem vermieden.

Um die Alkalität in dem dem Kühlturm 21 zugeführten Wasser niedrig und auf höchstens 2–3 mval/l zu halten, wird ein Teilstrom des von der Anlage 19 kommenden Wassers in der Leitung 25 abgezweigt und durch eine Kationenaustauschanlage 26 geführt. Die Anlage 26 enthält üblicherweise einen schwach sauren Kationenaustauscher in der Wasserstoffform. Aufgrund der Selektivität des Kationenaustauschers werden bevorzugt zweiwertige Kationen, Ca- und Mg-Ionen, aber auch Na-, K- und auch $NH_4$-Ionen, ausgetauscht. Dementsprechend findet eine Verminderung des Salzgehalts und der Härte des Wassers statt. Das so behandelte Wasser wird in der Leitung 27 dem unbehandelten in der Leitung 20 zugegeben und dieses Wasser verwendet man im Kühlturm 21 als Kühlwasser.

Im Kühlturm 21 wird das Wasser mit der Pumpe 22 durch die Kühleinrichtung 23 geführt und im Turm verrieselt. Ein Teil des Wassers verdunstet dabei und zieht aus dem Kühlturm 21 nach oben ab. Ein Teil des im Kreis laufenden Wassers, der auch als Abschlämmung (blow down) bezeichnet wird, gelangt mit Hilfe der Pumpe 24 in die Leitung 5 und damit zurück in die Abwasserbehandlung.

Der schwach saure Kationenaustauscher der Anlage 26 wird nach Erschöpfung mit einer Lösung von organischen Säuren, z.B. Reaktionswasser aus der Kohlenwasserstoffsynthese, aus der Leitung 28 behandelt. Der Regenerierablauf wird über die Leitung 29 der biologischen Behandlungsstufe 8 zugeführt. Es kann sich empfehlen, von Zeit zu Zeit zusätzlich eine Regenerierung des Kationenaustauschers durch eine Mineralsäure vorzunehmen, weil die Härtebildner durch die relativ schwachen organischen Säuren nur teilweise eluiert werden. Die Mineralsäure wird durch die Leitung 30 zugegeben, der zugehörige Regenerierablauf durch die Leitung 31 aus dem System entfernt.

Das Entfernen von Überschussalkalität muss nicht unbedingt in dem dem Kühlturm 21 zugeführten Wasser erfolgen, man kann es auch im Wasser der Leitung 5 vornehmen. Zu diesem Zweck leitet man die durch Verdunsten im Kühlturm 21 stark verringerte Wassermenge durch eine nicht dargestellte Kationenaustauschanlage, die entsprechend der Anlage 26 ausgestaltet ist und ebenso regeneriert werden kann. Das behandelte Wasser fliesst dann, wie aus der Zeichnung zu entnehmen ist, in den Behälter 4.

Beispiel

In einer der Zeichnung entsprechenden Pilotanlage wurden die in der nachstehenden Tabelle wiedergegebenen Daten gemessen.

Der Strom in Leitung 1 ist ein nach Vorbehandlung durch Flüssig-flüssig-Extraktion und Strippen mit Dampf erhaltenes Gaswasser aus einer Kohledruckvergasung. Der Strom in Leitung 28 ist ein bei der Kohlenwasserstoff-Synthese anfallendes Reaktionskondensat, das praktisch nur organische Belastung in Form von Fettsäuren ($C_2$–$C_5$) enthält. Beide Ströme stellen die gesamte Abwasserzufuhr mit zusammen 160 l/h dar. Ausserhalb des Systems zu behandeln sind nur die in den Leitungen 4a, 15 und 19b anfallenden konzentrierten Schlämme und salzhaltigen Abwässer einer Menge von insgesamt 10 l/h. Im Kühlturm 21 werden pro Stunde 150 l Wasser verdunstet.

In dem aus der Nachklärung 11 in der Leitung 12 ablaufenden Wasser mit einem restlichen CSB von ca. 200 ppm wird durch Flockung mit 60 ppm Bentonit und 5 ppm Polyelektrolyt der CSB auf 150 ppm in der Leitung 16 vermindert. Die anschliessende Filtration im Zweistoff-Filter 17 und die Behandlung mit Aktivkohle im Filter 18 bringen eine weitere Reduktion des CSB auf etwa 50 ppm vor dem Anionenaustauscher 19. Der Austauscher 19 arbeitet mit IRA-68 von Rohm und Haas. Das durch unvollständige Denitrifizierung zwangsläufig im Abwasser der Leitung 16 vorhandene $NO_2^-/NO_3^-$ wird ebenfalls zu einem grosen Teil ausgetauscht. Schliesslich wird der CSB durch adsorptive Vorgänge im Anionenaustauscher 19 auf 30 ppm vermindert. Ein Teilstrom von 100 l/h wird in der Leitung 25 durch den schwach sauren Kationenaustauscher 26 in der Wasserstoffform geleitet. Der schwach saure Kationenaustauscher arbeitet mit IRC-84 von Rohm und Haas. Im ablaufenden Strom 27 sind Kalium/Natrium und Calcium/Magnesium weitgehend gegen $H^+$-Ionen ausgetauscht. Dementsprechend enthält das Mischwasser der Leitung 20a eine verminderte Menge Alkali- und Erdalkaliionen und eine verminderte Alkalität. Dieses Mischwasser wird im Kühlsystem 21, 22, 23 teilweise verdampft und aufkonzentriert, so dass der Strom der Leitung 5 resultiert. Im Kühlsystem 21, 22, 23 findet eine teilweise Nitrifikation des $NH_3/NH_4^+$-Gehalts statt, wodurch sich die im Wasser der Leitung 5 gemessenen Konzentrationen für $NH_3/NH_4^+$ und $NO_2^-/NO_3^-$ ergeben.

Zur Regeneration des Kationenaustauschers wird der Abwasserstrom der Leitung 28 benutzt, der organische Säuren überwiegend als Essigsäure enthält. Der Regenerierablauf in der Leitung 29 enthält die ausgetauschten Alkaliionen und auch die Erdalkaliionen, da ein sehr grosser Überschuss (mehr als 10fach) organischer Säuren angewandt wurde. Dieser Regenerierablauf wird in der Leitung 29 vollständig der biologischen Reinigung aufgegeben.

An Behandlungschemikalien werden pro Stunde durch die Leitung 19a 1148 mval Ammoniak geführt, die aber zu etwa 90% durch Rückgewinnung wiederverwendet werden. Durch die Leitung 19c werden 1148 mval $CO_2$ zugeführt und aus der Leitung 3 kommen 452 mval an $Ca(OH)_2$.

Da im vorliegenden Fall eine ausgeglichene Alkalibilanz gegeben ist, d.h. kein überschüssiges Alkali entfernt werden muss und auch keine Erdalkalianreicherung am Kationenaustauscher stattfindet, erübrigt sich die Anwendung von Mineralsäure, die in der Leitung 30 zuzuführen wäre und einen zusätzlichen Abwasserstrom 31 zur Folge hätte.

Tabelle

| Strom in der Leitung | 1 | 5 | 28 | 7 | 16 | 20 | 27 | 20a | 29 | 4a | 15 | 19b |
|---|---|---|---|---|---|---|---|---|---|---|---|---|
| Menge (l/h) | 120 | 40 | 40 | 199 | 197 | 190 | 100 | 190 | 40 | 1 | 2 | 7 |
| $F^-$ | 5,2 | 4,75 | 0 | 2,8 | 2,8 | 1,0 | 1,0 | 1,0 | – | 259 | 2,8 | 51,7 |
| $Cl^-$ | 1,5 | 1,42 | – | 1,2 | 1,2 | 0,3 | 0,3 | 0,3 | – | 1,2 | 1,2 | 25,3 |
| $SO_4^{--}$ | 1,0 | 1,0 | – | 1,4 | 1,4 | 0,2 | 0,2 | 0,2 | – | 1,4 | 1,4 | 33,7 |
| $SCN^-$ | 1,0 | – | – | – | – | – | – | – | – | – | – | – |
| $NO_2^-/NO_3^-$ | – | 4,2 | – | 0,85 | 1,2 | 0,3 | 0,3 | 0,3 | – | 0,85 | 1,2 | 25,3 |
| $Na^+/K^+$ | 0,5 | 15,7 | – | 6,0 | 6,0 | 6,0 | 0,9 | 3,3 | 12,8 | 6,0 | 6,0 | 6,0 |
| $Ca^{++}/Mg^{++}$ | 0,2 | 2,4 | – | 0,8 | 0,8 | 0,8 | 0,2 | 0,5 | 1,4 | 469 | 0,8 | 0,8 |
| $NH_3/NH_4^+$ | 12,0 | 2,0 | – | 7,6 | 1,0 | 1,0 | 1,0 | 1,0 | – | 8,2 | 1,0 | 165 |
| $CO_3^{--}/HCO_3^-$ | – | 8,6 | – | 4,6 | 1,2 | 6,0 | 0,3 | 3,0 | – | 210 | 1,2 | 1,2 |
| CSB (mg/l) | 1500 | 145 | 12000 | 3317 | 150 | 30 | 30 | 30 | 12000 | 3317 | – | 800 |
| organische Säuren | – | – | 180 | – | – | – | – | – | 180 | – | – | – |

sofern nichts anderes angegeben, Konzentration in mval/l

**Patentansprüche**

1. Verfahren zum Behandeln von Abwasser, insbesondere Gaskondensaten aus Anlagen der Kohlevergasung und/oder Kohlechemie, mit einem Gehalt an den Anionen $SO_4^{--}$, $SCN^-$, $NO_3^-$, $Cl^-$ und $F^-$ von insgesamt pro Liter mindestens 2 mval und einer organischen Belastung von mindestens 1000 mg chemischem Sauerstoffbedarf, wobei man das Abwasser durch eine biologische Reinigung leitet, eine Feinreinigung anschliesst, in einer Anionenaustauschstufe starke Anionen gegen Hydrogencarbonationen austauscht und mindestens einen Teil des behandelten Wassers dem Abwasser vor der biologischen Reinigungsstufe zugibt, dadurch gekennzeichnet, dass man aus dem von der Anionenaustauschstufe kommenden Wasser, das mindestens 2 mval/l Alkalität enthält, mindestens einen Teil der Alkalität in einer Kationenaustauschstufe entfernt, bevor man das Wasser in das Abwasser zurückleitet, und dass man in der Kationenaustauschstufe zum Regenerieren organische Säuren verwendet und den Regenerierablauf dem in der biologischen Reinigungsstufe zu behandelnden Abwasser zugibt.

2. Verfahren nach Anspruch 1, dadurch gekennzeichnet, dass es sich bei den organischen Säuren überwiegend um Fettsäuren mit einer Dissoziationskonstante grösser $10^{-5}$ handelt.

3. Verfahren nach Anspruch 1, dadurch gekennzeichnet, dass man das aus der Anionenaustauschstufe kommende Wasser vor oder nach der Kationenaustauschstufe in einem Kühlturm als Kühlwasser verwendet, bevor man das Wasser in das Abwasser zurückleitet.

4. Verfahren nach Anspruch 1 oder 2, dadurch gekennzeichnet, dass zur Entfernung von überschüssiger Alkalität und/oder von im Kationenaustauscher angereicherten Härtebildnern die Regeneration mit Mineralsäure erfolgt und der Regenerierablauf aus dem System abgeführt wird.

**Claims**

1. A process of treating sewage, particularly gas condensates from coal-gasifying plants and/or coal chemical plants, which sewage has a total content of at least 2 mval/l of the anions $SO_4^{--}$, $SCN^-$, $NO_3^-$, $Cl^-$ and $F^-$ and contains organic matter in an amount corresponding to a chemical oxygen demand (COD) of at least 1000 mg/l, wherein the sewage is passed through a biological purification stage and a succeeding fine purification stage, strong anions are exchanged in an anion exchanger with hydrogen carbonate ions, and at least part of the treated water is added to the sewage before the biological purification stage, characterized in that water which has left the anion exchanger and has an alkalinity of at least 2 mval/l is treated in a cation exchange stage to remove at least part of the free alkali from the water before the latter is recycled to the sewage, and that organic acids are used for regeneration in the cation exchange stage and the regeneration eluate is added to the sewage which is to be treated in the biological purification stage.

2. A process according to claim 1, characterized in that the organic acids consist mainly of fatty acids having a dissociation constant in excess of $10^{-5}$.

3. A process according to claim 1, characterized in that the water leaving the anion exchanger is used in a cooling tower as cooling water before or after the cation exchange stage and is subsequently recycled to the sewage.

4. A process according to claim 1 or 2, characterized in that mineral acid is used for regeneration to remove surplus free alkali and/or salts which cause hardening and have been enriched in the cation exchange material and the regeneration eluate is removed from the system.

## Revendications

1. Procédé de traitement des eaux résiduaires, notamment de condensats de produits gazeux provenant d'installations de la gazéification du charbon et/ou de la carbochimie, ayant une teneur en anions $SO_4^-$, $SCN^-$, $NO_3^-$, $Cl^-$ et $F^-$ au total d'au moins 2 milliéquivalents par litre et une charge organique de demande d'oxygène chimique, d'au moins 1000 mg, en envoyant les eaux résiduaires à une épuration biologique, en faisant suivre d'une épuration fine, en échangeant dans un stade d'échange d'anions les anions forts contre des ions hydrogénocarbonates et en ajoutant au moins une partie de l'eau traitée aux eaux résiduaires avant le stade d'épuration biologique, caractérisé en ce qu'il consiste à éliminer de l'eau qui vient du stade d'échange des anions et qui contient au moins 2 milliéquivalents d'alcalinité/litre, au moins une partie de l'alcalinité dans un stade d'échange de cations avant de retourner l'eau aux eaux résiduaires et à utiliser, au stade d'échange de cations pour la régénération, des acides organiques, et à ajouter ce qui sort de la régénération aux eaux résiduaires à traiter au stade d'épuration biologique.

2. Procédé suivant la revendication 1, caractérisé en ce que les acides organiques sont, d'une manière prédominante, des acides gras ayant une constante de dissociation supérieure à $10^{-5}$.

3. Procédé suivant la revendication 1, caractérisé en ce qu'il consiste à utiliser, comme eau de refroidissement dans une tour de refroidissement, en amont ou en aval du stade d'échange de cations, l'eau provenant du stade d'échange d'anions, avant de retourner l'eau aux eaux résiduaires.

4. Procédé suivant la revendication 1 ou 2, caractérisé en ce qu'il consiste, pour éliminer l'alcalinité en excès et/ou des agents donnant de la dureté concentrés dans l'échangeur de cations, à effectuer la régénération par des acides minéraux et à évacuer du système ce qui sort de la régénération.